# EUROPEAN PATENT APPLICATION

(11) **EP 2 524 726 A1**
(43) Date of publication of application: **21.11.2012**
(21) Application number: 11305596.6
(22) Date of filing: 18.05.2011
(51) Int. Cl.: B01D 53/047

(54) **Low energy cyclic PSA process**

(71) Applicant: Total S.A., 92400 Courbevoie (FR)
(72) Inventor: Rifflart, Sébastien, 75012 Paris (FR); Almeida Peixoto Ribeiro, Ana Mafalda, 4450-676 LECA DA PALMEIRA (PT); Godinho de Faria dos Santos, Joao Carlos, 4450-296 MATOSINHOS (PT); Egidio Rodrigues, Alirio, 4100-115 PORTO (PT)
(74) Representative: Cabinet Plasseraud

(57) **Abstract**

The invention is drawn to a cyclic pressure swing adsorption (PSA) process to recover an off-gas stream at high pressure with low energy consumption. Each cycle of said process comprises a blowdown phase consisting in lowering the pressure in an adsorbent bed from P_{high} to P_{low}, wherein said blowdown phase is divided into several partial blowdown phases, wherein the gas streams discharged during the partial blowdown phases are introduced into respective discharge tanks.

## Description

### FIELD OF THE INVENTION

The present invention relates to the separation of gaseous mixtures. More specifically, the present invention relates to a cyclic pressure swing adsorption (PSA) process to recover an off-gas stream at high pressure with low energy consumption.

### BACKGROUND OF THE INVENTION

Syngas (or synthesis gas) is a gas mixture that contains carbon monoxide CO and hydrogen H₂ in various proportions. It generally also contains water, nitrogen, argon, residues of hydrocarbon compounds like CH₄, hydrogen sulphide H₂S and carbon dioxide CO₂. Syngas is traditionally produced by coal gasification, and is useful for basic industrial chemical processes like methanol production and Ficher-Tropsch reaction. It is also useful for producing essentially pure hydrogen. To improve the H₂ content, carbon monoxide is preferably converted to carbon dioxide in a water gas shift reaction:

CO + H₂0 → CO₂ + H₂

A water gas shift unit allows maximizing the hydrogen production by the conversion of the most part of the CO.

CO₂ and H₂S are generally extracted from syngas because they may interact with downstream catalysts and adversely affect downstream syntheses. Different types of processes can be used to remove CO₂. Acid gas may be removed from the syngas by means of an acid gas recovery unit. Typically, this type of unit uses a liquid solvent to scrub acid gases like CO₂ and H₂S. However, the use of a solvent and its subsequent regeneration is expensive. Furthermore, acid gas recovery processes traditionally comprise a step at very low temperature, for instance down to -40°C, which has a high energy cost.

Another type of process which can be used to remove CO₂ is the adsorption on a solid phase. Since the early 1980s, pressure swing adsorption (PSA) has become the state of the art technology in the chemical and petrochemical industries for purifying hydrogen. This process is adapted for the continuous production of ultrapure hydrogen gas stream, with a purity of at least 99.99%. The CO₂ is recovered in the off-gas of the PSA unit with all the other gases and impurities and with non-separated H₂. Consequently, the concentration of CO₂ in the off-gas of a PSA is generally low, for example of about 40%.

Nowadays, due to ecological concern, the reduction of emissions of CO₂ has become an important field of research. Carbon dioxide capture and storage constitute a promising option that can drastically reduce these emissions. In this context, it will be advantageous to recover CO₂ from syngas treatment plants.

However, the CO₂ stream has to meet some criteria in order to be stored. Notably, CO₂ concentration is preferably higher than 95% and CO₂ stream is typically compressed to the supercritical level for transportation to its storage site. The energetic cost of the compression step is high.

More generally, the off-gas of a PSA process is generally recovered from the PSA unit at a low pressure. However, when this stream is used in downstream units or within the PSA process itself, it may be necessary to compress it until a higher pressure is reached. Compression steps are always energetically demanding.

In this context, it is highly desirable to provide a new improved PSA process to recover an off-gas stream at a high pressure with low energy consumption.

### SUMMARY OF THE INVENTION

One subject-matter of the present invention is a cyclic PSA process, each cycle of said process comprising a blowdown phase consisting in lowering the pressure in an adsorbent bed from P_{high} to P_{low}, wherein said blowdown phase is divided into several partial blowdown phases, wherein the gas streams discharged during the partial blowdown phases are introduced into respective discharge tanks.

### BRIEF DESCRIPTION OF THE DRAWINGS

**FIG. 1** is a schematic representation of one preferred embodiment of the blowdown phase of the process according to the invention on one adsorbent bed.
**FIG. 2** is an example of pressure condition for a blowdown phase.
**FIG. 3** is a chart representing a preferred cycle program of the process according to the invention designed for a four-bed unit.
**FIG. 4** is a schematic representation of one preferred cycle of the process according to the invention.
**FIG. 5** is a chart representing a preferred cycle program of the process according to the invention designed for a plant of six four-bed units.
**FIG. 6** is a schematic representation of another preferred cycle of the process according to the invention.
**FIG. 7** is a schematic representation of a coal to liquid fuels plant using Fischer-Tropsch process.
**FIG. 8** is a schematic representation of a coal to methanol plant.

### DETAILED DESCRIPTION

Unless otherwise stated, the percentages are volume percentages.

Moreover, the expression "comprised between" should be understood to designate the range described, including the upper and lower bounds.

The PSA process is a well-known technology used to separate some gas species from a mixture of gases with an adsorbent material. At high pressure, specific gas species are preferentially adsorbed on the adsorbent bed. The process then swings to low pressure to desorb said specific gas species from the adsorbent material. Therefore, a PSA process is defined by at least one high pressure P_{high} and one low pressure P_{low}. The values of said high and low pressures are preferably chosen by the skilled person according to the nature of the adsorbent bed and the nature of the gas species to be preferentially adsorbed.

Preferably, the low pressure P_{low} according to the invention is lower than 5 bar, more preferably lower than 3 bar. Even more preferably, said low pressure P_{low} is the atmospheric pressure, i.e. 1 atm, which is around 101.325 kPa. The selection of the atmospheric pressure as low pressure is advantageous for the power consumption of the process since it does not require the use of a vacuum pump. The low pressure is preferably not lower than the atmospheric pressure.

The high pressure P_{high} of the process according to the present invention is preferably higher than 10 bar, more preferably higher than 30 bar. However, said high pressure generally does not exceed 100 bar.

A PSA process requires the use of at least one adsorbent bed having at least one inlet and one outlet. Adsorbent beds are well-known by the person skilled in the art. Typical adsorbents are activated carbon, silica gel, alumina and zeolites. Examples of such adsorbents are activated carbon PBL from Calgon, activated carbon ACM 3mm from CECA, activated carbon RB1 or R2030 from Norit, Zeolites 5A from UOP or Linde, Zeolithe 13X from UOP or Süd Chemie, Silica Gel KC from Kali Chemie, Metal Organic Framework MIL 101 or Cu-BTC. An adsorbent bed may consist in one layer or in several layers of different adsorbents. Preferably, the adsorbent bed used in the process according to the present invention consists in one single layer of activated carbon, for example the one marketed by the Norit group under the trade name Activated Carbon R2030.

The PSA cycle of the present invention comprises at least one blowdown phase. The blowdown phase consists in lowering the pressure in the adsorbent bed from P_{high} to P_{low} by withdrawing a gas stream from the adsorbent bed.

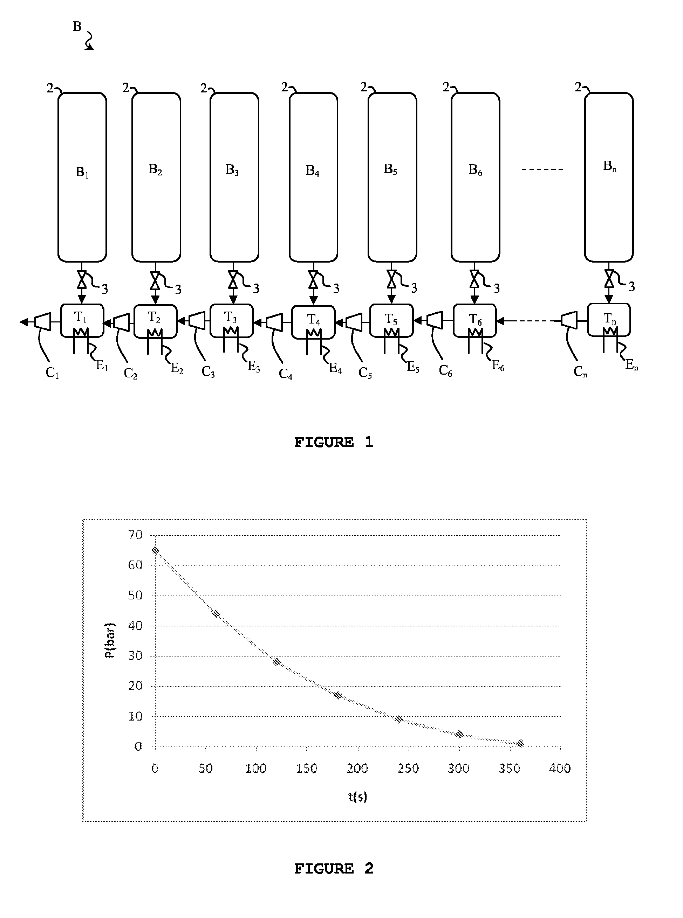

It has been discovered that the energetic cost of the process could be significantly reduced by dividing the blowdown phase into several partial blowdown phases, wherein the gas streams discharged during the partial blowdown phases are introduced into respective discharge tanks. This blowdown phase is schematically represented on **FIG 1**. For comprehension purpose, **FIG. 1** does not represent faithfully a real process unit. Rather, **FIG. 1** represents the different successive parts of one blowdown phase.

On **FIG. 1****,** the adsorbent bed **2,** which is represented several times for comprehension purpose, is undergoing a blowdown phase **B,** which is divided into n partial blowdown phases **B₁** to **Bₙ.** n, which represents the number of partial blowdown phases, is an integer which is at least 2. During the partial blowdown phases, the gas streams are discharged into respective discharge tanks **T₁** to **Tₙ.** At the beginning of the first partial blowdown phase **B₁,** the pressure in the adsorbent bed is P_{high}. The pressure is decreased until it reaches P_{low} at the end of the partial blowdown phase **Bₙ.** The pressure inside each tank is equal to the pressure of the gas stream which is discharged in said tank, at the end of the partial blowdown phase during which said gas is discharged. Since the pressure is decreasing during the blowdown phase **B,** the tanks have decreasing pressures: the first tank **T₁,** which receives the gas stream first, is at a higher pressure than the second tank **T₂,** and so on, until the last tank **Tₙ** which is at said low pressure P_{low}. n also represents the number of discharge tanks. The number of tanks is adapted for the global dimension of the process and to the flow rate of feed gas. Preferably, n is between 2 and 10.

According to a preferred embodiment, tanks **T₁** to **Tₙ** are in fluid communication. Advantageously, the tanks are connected in series with increasing pressure. A compressor means **C₁** to **Cₙ** may be located between each connected tank. The gas in each tank, except the tank having the highest pressure, is compressed and introduced into the other tank that has the lowest of the higher pressures. The gas stream at P_{low} in the tank **Tₙ** is compressed and introduced into the tank **Tₙ₋₁,** which is at a higher pressure, and so on. Finally, the gas stream which is in the tank **T₁** may be further compressed in the compressor **C₁.** The gas stream at high pressure leaving **C₁** may for instance be introduced into the adsorbent bed at P_{high} for a rinse step for example or may be further compressed to be transported at a supercritical state to a storage site.

Each tank may be equipped with a cooling means, especially a cooling exchanger, **E₁** to **Eₙ.** Indeed, the lower the temperature of the gas stream, the lower the energy requirement for compressing said gas stream. The cooling means may advantageously contribute to minimize the energetic consumption of the process of the invention.

Preferably, the blowdown pressure decrease condition is linear during each partial blowdown phase. An example of pressure condition for a 360s blowdown step is represented on **FIG. 2****.** The decrease condition may be controlled by the switching valve **3** located at the outlet of the adsorbent bed **2.** A linear decrease enables to flatten the flow rates of the gas stream, a mass flow controller can also be used to avoid fluctuation of the flow rate at the inlet of the compressors.

The implementation of the process according to the invention advantageously allows the recovery of an off-gas stream at a high pressure with low energy consumption. As explained above, this process may be implemented to recover CO₂ from syngas treatment plants, before the transport of the CO₂ stream in a supercritical state to a storage place. In this context, it will be highly desirable that the process according to the present invention allows the recovery of a CO₂ stream of a high purity, preferably higher than 95%, with a high recovery yield, preferably higher than 90%.

Classic PSA processes which are well-known in the art do not allow the recovery of CO₂ stream of high purity.

According to a preferred embodiment, the process of the present invention is a cyclic PSA process to recover an essentially pure CO₂ stream from a feed gas containing H₂ and CO₂, each cycle of said process consisting of the following consecutive steps:
1. an adsorption phase, which comprises the introduction of said feed gas to the inlet of an adsorbent bed at high pressure P_{high} for flowing therethrough with selective adsorption of CO₂, forming a first adsorption front of CO₂ in said adsorbent bed, and the discharge of an effluent with unadsorbed products from the outlet of said adsorbent bed to a primary discharge tank, said primary discharge tank being under said high pressure P_{high}, said adsorption phase being continued for a controlled time period A;
2. a rinse phase, which comprises the introduction of an essentially pure CO₂ stream to the inlet of said adsorbent bed at said high pressure P_{high} for flowing therethrough, forming a second adsorption front of CO₂ in said adsorbent bed, and the discharge of a product effluent from the outlet of said adsorbent bed to said primary discharge tank, said rinse phase being continued for a controlled time period R which ends when said second adsorption front of CO₂ joins up the first one and arrives at the outlet of the adsorbent bed;
3. the blowdown phase, as described above, which comprises the lowering of the pressure in said adsorbent bed by countercurrently withdrawing a gas stream therefrom and the discharge of said gas stream through said inlet of said adsorbent bed to secondary discharge tanks, said blowdown phase being continued for a controlled time period B which ends when said adsorbent bed is at low pressure P_{low};
4. a countercurrent purge phase, which comprises the introduction of a gas stream coming from said primary discharge tank to the outlet of said adsorbent bed for flowing therethrough, and the discharge of an essentially pure CO₂ stream from the inlet of said adsorbent bed to said secondary discharge tank at P_{low}, said countercurrent purge phase being continued for a controlled time period PU;
5. a pressurization phase, which comprises the introduction of a gas stream coming from said primary discharge tank to the outlet of said adsorbent bed, said pressurization phase being continued for a controlled time period PR which ends when said adsorbent bed is at said high pressure P_{high}.

According to the present invention, the expression "essentially pure CO₂ stream" means a stream containing at least 90%, preferably at least 95% of CO₂.

The feed gas of the process according to this embodiment of the present invention is a gas mixture containing H₂ and CO₂. Preferably, at least 50%, more preferably at least 60%, more preferably at least 70%, and even more preferably at least 80% of the feed gas is a mixture of H₂ and CO₂. The proportions of said components may vary. The volume ratio H₂/CO₂ is preferably between 0.8 and 3, more preferably between 1 and 2.

The feed gas may be produced by a water gas shift process. The source of the feed gas may determine the presence of other compounds than H₂ and CO₂.

The feed gas may contain one or more other compounds, for instance water, nitrogen, argon, gaseous residues of hydrocarbon compounds like CH₄, hydrogen sulphide H₂S and carbon monoxide CO. According to a first embodiment, the CO content is at most 10%, preferably at most 5%, more preferably at most 3%, of the feed gas. According to a second embodiment, the CO content is between 10% and 30%, preferably between 20% and 25%, of the feed gas. Preferably, the total content of compounds which are not H₂, CO₂ and CO is below 10%, more preferably below 5%. It may be advantageous to remove some of the other components, in particular H₂O and/or H₂S, of the feed gas. H₂S and/or H₂O removal units are well known in the art and may be implemented before carrying out the process of the present invention.

The feed gas of the process according to this embodiment of the present invention may be at a temperature above -100°C, preferably between 10°C and 75°C and more preferably between 20°C and 60°C. Advantageously, the feed gas does not undergo a cooling step before being introduced into the adsorbent bed. Advantageously, the feed gas is at room temperature.

According to this preferred embodiment, each cycle of the cyclic PSA process consists in five successive phases: 1. Adsorption phase A, 2. Rinse phase R, 3. Blowdown phase B, 4. Countercurrent purge phase PU, and 5. Pressurization phase PR.

A PSA cycle is not continuous. Therefore, traditionally, in an installation that is run continuously with constant feed gas, several adsorbent beds are placed side-by-side for forming a PSA unit. The PSA process according to the preferred embodiment of the present invention is preferably run in a four-bed unit.

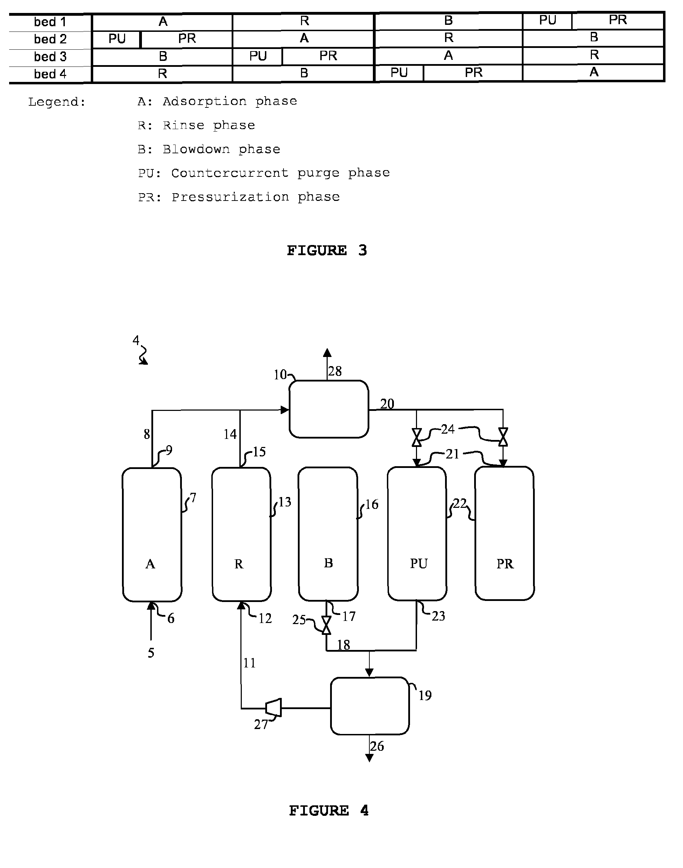

A preferred cycle program has been designed for this four-bed embodiment. This cycle program is represented on the chart of **FIG. 3**. According to this cycle program, each time period A, R, B and the sum of PU and PR are equal:

A = R = B = PU + PR

Therefore, the time duration of a full cycle is divided in four equal parts. During each of this part:
- one bed is in adsorption phase,
- one bed is in rinse phase,
- one bed is in blowdown phase, and
- one bed is in countercurrent purge phase or in pressurization phase.

According to this cycle program, it is possible to run a four-bed PSA unit according to the preferred embodiment of the process of the present invention continuously.

The five successive phases of one cycle according to the preferred embodiment of the invention are schematically represented on **FIG 4** for a four-bed unit at the time when bed 1 is in the adsorption phase A. For convenience, bed 2 has been represented twice because two phases (countercurrent purge phase PU and pressurization phase PR) occur during one adsorption phase A.

### Adsorption phase A

The adsorption phase comprises the introduction of the feed gas **5** to the inlet **6** of the 1^{st} adsorbent bed **7** at the high pressure P_{high}. When the feed gas is flowing through the 1^{st} adsorbent bed **7,** CO₂ is selectively adsorbed. Unadsorbed product effluent **8** is discharged from the outlet **9** of the 1^{st} adsorbent bed **7** to a primary discharge tank **10.** The primary discharge tank **10** is under said high pressure P_{high}. The duration of the adsorption phase is designated as **A.**

The unadsorbed product effluent is substantially free of CO₂. Preferably, the CO₂ content in the unadsorbed product effluent is below 10%, more preferably below 5%. When CO₂ is adsorbed on the adsorbent bed, it forms a first adsorption front. The time period **A** is controlled in such a way that said first adsorption front of CO₂ is still well within the adsorption bed at the end of the step.

### Rinse phase R

At the time the 1^{st} absorbent bed **7** is undergoing the adsorption phase **A,** the 4^{th} adsorbent bed is undergoing the rinse phase **R.** An essentially pure CO₂ stream **11** is introduced, concurrently to the feed stream, to the inlet **12** of the 4^{th} adsorbent bed **13.** The pressure of the pure CO₂ stream is the same as the pressure of the feed gas, i.e. said high pressure P_{high}. The essentially pure CO₂ stream flows through the 4^{th} adsorbent bed **13** and the product effluent **14** is discharged from the outlet **15** of the 4^{th} adsorbent bed **13** to said primary discharge tank **10.** The duration of the rinse phase is designated as **R.**

During said rinse phase, the adsorption of CO₂ forms a second adsorption front in the adsorbent bed, which joins the first adsorption front. The time period **R and** the rinse flow rate are controlled so as to precisely stop when the joined adsorption fronts arrive at the outlet of the adsorbent bed. If the time period **R** is too long, the joined fronts of CO₂ will exceed the adsorbent bed and part of the CO₂ will flow to the primary discharge tank with product effluent. The separation of the compound will be poor, and part of CO₂ will not be recovered. If the time period **R** is too short, the joined adsorption fronts of CO₂ will not arrive at the outlet of the adsorbent bed. It follows that the adsorbent bed still contains a part of non CO₂ product. This will adversely affect the purity of the recovered CO₂ stream.

### Blowdown phase B

At the time the 1^{st} absorbent bed **7** is undergoing the adsorption phase **A** and the 4^{th} adsorbent bed **13** is undergoing the rinse phase **R,** the 3^{rd} adsorbent bed is undergoing the blowdown phase **B.** The blowdown phase consists in lowering the pressure in the 3^{rd} adsorbent bed **16** from P_{high} to P_{low} by countercurrently withdrawing a gas stream **12** therefrom and discharging said gas stream through the inlet **17** of the 3^{rd} adsorbent bed **16.** The gas stream **18** is discharged into secondary discharge tanks **19,** in accordance with the present invention. Said gas stream **18** is essentially pure CO₂ stream. The duration of the blowdown phase is designated as **B.** At the end of the blowdown phase, the pressure of the adsorbent bed has decreased to the low pressure value P_{low}.

According to the process of the present invention, the blowdown phase is divided into several partial blowdown phases, wherein the gas stream **18** discharged during the partial blowdown phases is introduced into several discharge tanks of decreasing pressure.

At the time the 1^{st} absorbent bed **7** is undergoing the adsorption phase **A,** the 4^{th} adsorbent bed **13** is undergoing the rinse phase **R** and the 3^{rd} adsorbent bed **16** is undergoing the blowdown phase **B,** the 2^{nd} adsorbent bed is undergoing first the countercurrent purge phase **PU** and then the pressurization phase **PR.**

### Countercurrent purge phase PU

The purge phase is implemented countercurrently. A gas stream **20** coming from said primary discharge tank **10** is introduced to the outlet **21** of the 2^{nd} adsorbent bed **22** at the low pressure P_{low} and is flowing therethrough. It is discharged from the inlet **23** of said 2^{nd} adsorbent bed **22** to said secondary discharge tank **19** at P_{low}. The duration of the countercurrent purge phase is designated as **PU.** The countercurrent purge phase and flow rate are controlled so that the bed is essentially free of CO₂ at the end of the step.

### Pressurization phase PR

Finally, the last phase of the cycle **4** of the preferred process of the invention is the pressurization phase, which comprises the introduction of a gas stream **20** coming from said primary discharge tank **10** to the outlet **21** of said 2^{nd} adsorbent bed **22.** The duration of the pressurization phase is designated as **PR.** At the end of the pressurization phase, the pressure of the adsorbent bed has increased to the high pressure value P_{high}.

The switches from one phase to the other may be achieved by opening and closing of a numbers of switching valves not represented on **FIG. 4** where only the pressure release valves **24** and **25** are represented.

The implementation of the preferred embodiment of the process according to the invention advantageously allows the recovery of an essentially pure CO₂ gas stream **26** from the feed gas **5.** The CO₂ recovery yield may reach preferably at least 85%, more preferably at least 90%, and even more preferably at least 95%.

According to a preferred embodiment of the present invention, the essentially pure CO₂ stream **11** which is introduced in the adsorbent bed during the rinse phase is provided by the secondary discharge tanks **19.** Said stream is compressed into a gas compressor **27** to reach the high pressure value P_{high} before being introduced into the adsorbent bed.

According to another preferred embodiment of the present invention, all or part of the essentially pure CO₂ stream is evacuated in order to be stored in CO₂ storage units. Said stream **26** may be advantageously compressed to a pressure suitable for transportation to its storage site, preferably above the critical pressure.

In order to treat various flow rates of feed gas, several units of PSA may be run in parallel. The feed gas may be divided in the same number of fraction as the number of units. These fractions of feed gas are preferably equal and the several units are preferably identical. The PSA process according to the present invention is preferably run in several four-bed units at the same time. Each of the four-bed units is preferably run according to the cycle program represented on the chart of **FIG. 3****.**

The number of partial blowdown phases n is preferably equal to the number of PSA units which are run at the same time. For example, a cyclic PSA process according to the preferred embodiment of the invention wherein the feed gas is divided into n PSA units is preferably run with n blowdown phases, using n secondary discharge tanks. The secondary discharge tanks are preferably shared by all units.

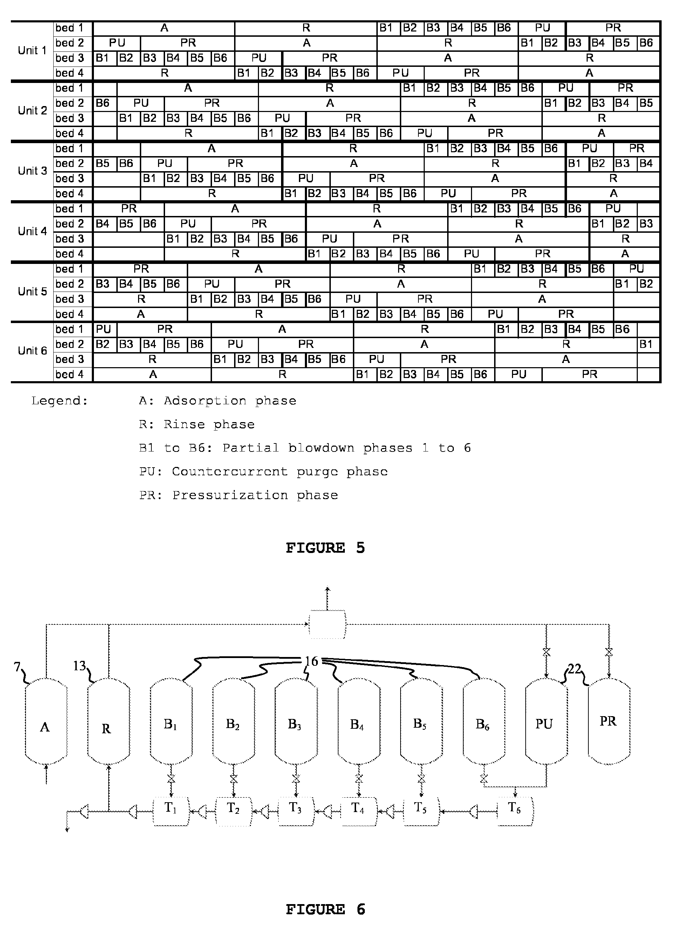

A preferred cycle program, in which n is 6, has been designed to this type of plant. This cycle program is represented on the chart of **FIG. 5****.**

According to this cycle program, the time period **B** is divided in 6 equal partial blowdown phases **B1** to **B6.** The time period **PU** is equal to the sum of **B1** and **B2,** and the time period **PR** is equal to the sum of **B3, B4, B5** and **B6.** The cycle program of each unit is shifted from one another for a time period equal to the time of one partial blowdown phase. Thanks to this cycle program, each secondary discharging tank is fed by one column at any time, except for the tank at the lowest pressure Tₙ which is fed at any time by three columns, two in purge phase and one in blowdown phase **B6.** According to this preferred cycle program, a relatively flat flow rate is obtained in each secondary discharge tank.

On **FIG. 6****,** a four-bed unit is represented at the time when the 1^{st} bed **7** is in the adsorption phase **A** and the 4^{th} bed **13** is in the rinse phase **R.** For convenience, the 2^{nd} bed **22** has been represented twice because two phases (countercurrent purge phase **PU** and pressurization phase **PR)** occur during one adsorption phase **A** and the 3^{rd} bed **16** has been represented six times because the blowdown phase **B** has been divided in 6 partial blowdown phases **B1** to **B6,** which occur during one adsorption phase **A.**

The preferred embodiment of the process according to the present invention advantageously allows the recovery of a product effluent which is substantially free of CO₂ **8 and 14.** Said product effluent is recovered into the primary discharge tank **10,** which is at the high pressure P_{high} of the PSA process. Said product effluent is at least partly used during the countercurrent purge phase and during the pressurization phase. The part remaining in said tank, stream **28,** may be used downstream for different uses.

According to a first embodiment of the present invention, the cyclic PSA process as disclosed above is a step of a syngas conditioning chain for a Fischer-Tropsch process. The Fischer-Tropsch process is a well-known chemical process that converts a mixture of carbon monoxide and hydrogen into liquid hydrocarbons.

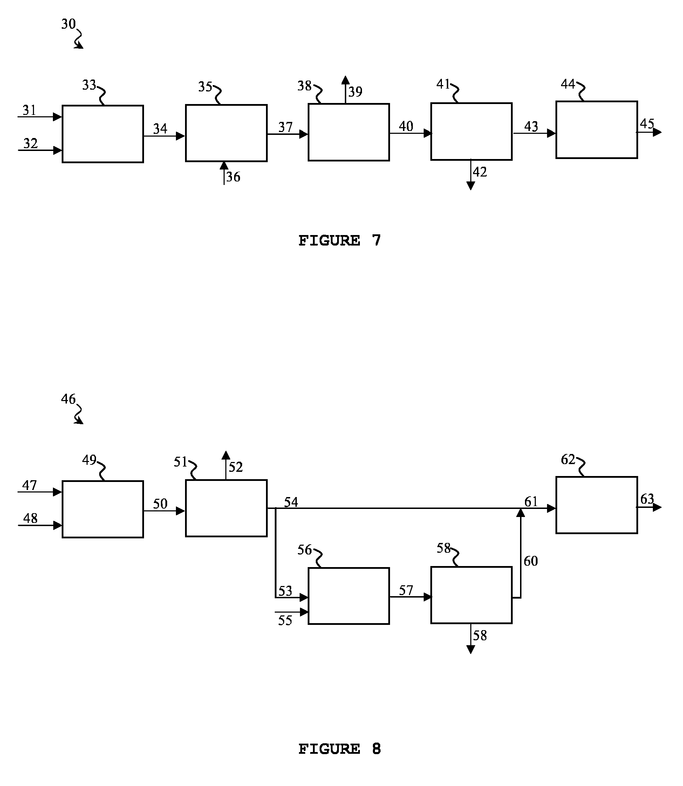

An example of said first embodiment is represented on **FIG. 7****.**

According to this embodiment, liquid hydrocarbons **45** may be produced from coal **31** by the global process **30.** Coal **31** is introduced into a gasifier reactor **33** with a stream of oxygen **32** to provide syngas **34** containing essentially H₂ and CO. Said syngas stream **34** is passed through a water gas shift unit **35** with water **36.** The effluent **37** of the water gas shift reactor is subjected to the cyclic PSA process according to the present invention in a PSA plant **41.** An essentially pure CO₂ stream **42** may be recovered. The product effluent **43,** which is essentially free of CO₂, is fed to a Fischer-Tropsch reactor **44.** The following reactions are catalysed in Fischer-Tropsch reactors:

(2x+1) H₂ + x CO → CₓH(₂ₓ₊₂) + x H₂O

where x is a positive integer.

The inlet stream to the Fischer-Tropsch reactor preferably satisfies a stoichiometric ratio of H₂/CO between 2.0 and 2.4. Furthermore, the inlet stream preferably contains less than 5% of inert compounds. Therefore, the performance of the PSA process of the invention is adapted by the person skilled in the art to reach these specifications.

Preferably, an H₂S removal step may be included in the Fischer-Tropsch process. This step may advantageously take place after the gasification of the coal, before the water gas shift reactor, for removing H₂S from the syngas. As represented in **FIG. 7****,** it may also take place in a H₂S removal unit **38** located after the water gas shift reactor **35** and before the PSA process **41,** for removing H₂S **39** from the feed gas of the PSA process.

According to a second embodiment of the present invention, the cyclic PSA process as disclosed above is a step of a syngas conditioning chain for a coal to methanol synthesis process.

An example of said second embodiment is represented on **FIG. 8****.**

According to this embodiment, a methanol stream **63** may be produced from coal **47** by the global process **46.**

According to this embodiment, coal **47** is introduced into a gasifier reactor **49** with a stream of oxygen **48** to provide syngas **50** containing essentially H₂ and CO. Said syngas stream **50** is divided into two streams **53** and **54.** The first fraction **53** of the stream is mixed with water **55** and is passed through a water gas shift reactor **56.** The effluent **57** of the water gas shift reactor is subjected to the cyclic PSA process according to the present invention in a PSA plant **58.** An essentially pure CO₂ stream **59** may be recovered. The product effluent **60,** which is essentially free of CO₂, is mixed with the second faction **54** of the syngas stream, and is fed to a methanol reactor **62.** In typical methanol reactor the following reactions occur:

CO + 2 H₂ → CH₃OH

CO₂ + 3 H₂ → CH₃OH +H₂O

The inlet stream to the methanol reactor **61** preferably satisfies a stoichiometric ratio of (H₂-CO₂)/(CO+CO₂) = 2.1. Therefore, the partition of the syngas stream and the performance of the PSA process of the invention are adapted by the person skilled in the art for reaching this stoichiometric ratio.

Preferably, an H₂S removal step may be included in the coal to methanol synthesis process. As represented in **FIG. 8****,** this step may advantageously take place in a H₂S removal unit **51** located after the gasification reactor **49,** before the division of the syngas, for removing H₂S **52** from the syngas.

### EXAMPLES

A mathematical model with mass, energy and momentum balances that represents the dynamic behaviour of a non isothermal, non diluted, multicomponent adsorbent bed was used to simulate a pressure swing adsorption process. The model was developed based on the following assumptions:
- Ideal gas behaviour throughout the column;
- No mass, heat or velocity gradients in the radial direction;
- Constant porosity along the bed;
- Axial dispersed plug flow; no temperature gradients inside each particle.

Additionally, the model accounts for external mass and heat transfer resistances, expressed with the film model, and it considers that the adsorbent particles are bidispersed with macropore and micropore mass transfer resistances, both expressed with the Linear Driving Force (LDF) model. The momentum balance is given by the Ergun equation.

The compressor power requirements were calculated considering adiabatic compression, multiple stages with the same pressure ratio and with a 5 psi pressure drop between stages, cooling of the gas between each stage to the inlet temperature of 50°C and an efficiency of 85%.

### Example 1

A cyclic PSA process with six units, each unit having four beds, has been mathematically modelled. The process cycle was in accordance with the schematic representation of **FIG. 4****.** The cycle program of each unit was according to the chart in **FIG. 3**.

The adsorbent bed consisted in one single layer of activated carbon marketed by the Norit group under the trade name Activated Carbon R2030.

The other parameters of the PSA process unit are summarized in Table 1.

**Table 1**

| **Column characteristics** | | | |
|---|---|---|---|
| Bed length [m] | | Bed diameter [m] | |
| 12 | | 4.4 | |

| **Flow rates [m³/s] (at operating conditions)** | | | |
|---|---|---|---|
| Feed | Rinse | | Purge |
| 0.6617 | 0.4883 | | 0.5084 |

| P_{high} [bar] | | P_{low} [bar] | |
|---|---|---|---|
| 65 | | 1 | |

| **Step times [s]** | | | |
|---|---|---|---|
| Adsorption, Rinse, Blowdown | Pressurization | | Purge |
| 360 | 240 | | 120 |

The feed gas had the following composition:
- 55.00% H₂
- 39.00% CO₂
- 2.20% CH₄
- 3.00% CO
- 0.80% N₂
The inlet temperature was 50°C.

### 1. a. Process with a single blowdown phase

The results are summarized in Table 2.

**Table 2**

| **Results with a single blowdown phase** | | | | |
|---|---|---|---|---|
| H₂ product | | CO₂ product | | Productivity H₂ [mol/kg/day] |
| Composition [%] | Recovery [%] | Composition [%] | Recovery [%] | 202.8 |
| CO₂: 4.08 | 96.29 | CO₂: 96.21 | 92.85 | Power consumption [MW] |
| H₂: 90.41 | | H₂: 3.57 | | |
| CH₄: 0.09 | | CH₄: 0.12 | | |
| CO: 4.62 | | CO: 0.09 | | 108.6 + 72.9 |
| N₂: 0.80 | | N₂: 0.01 | | |

The power consumption includes the compression of the CO₂ to 110 bar for storage. The total power consumption was 181.5 MW, 108.6 MW due to the compression to 65 bar of the stream used in the rinse phase plus 72.9 MW necessary to compress to 110 bar the CO₂ product for transportation.

### 1. b. Process with a divided blowdown phase

The blowdown phase has been divided into six equal partial blowdown phases, in accordance with the schematic representation of **FIG. 1****,** wherein n is 6. The cycle program of the six units was in accordance with the chart of **FIG 6****.** Six discharge thanks were simulated, each collecting one of the sub blowdown phases. The tanks pressures were set to:
T₁: 44.08 bar
T₂: 28.04 bar
T₃: 16.66 bar
T₄: 8.97 bar
T₅: 4.14 bar
T₆: 1 bar

It has been noted that the compositions of the obtained products and the productivity of the PSA process were not affected by the division of the blowdown phase.

With this configuration, the total energy consumption was only 77.3 MW, including compression for rinse and transportation of CO₂.

The two processes 1.a and 1.b allow the recovery of an essentially pure CO₂ stream, containing more than 95% CO₂. The recovery yield is above 90%.

In the same time, the two processes 1.a and 1.b allow the recovery of a product effluent containing more than 90% H₂ and less than 5% CO₂. This product effluent may advantageously be mixed with another syngas stream, to be fed to a methanol reactor.

The results obtained with the process 1.a and the process 1.b are compared. The performance of the process was not affected significantly and the recovered CO₂ stream and product effluent had comparable specifications. A significant reduction in the power consumption was achieved (over 57%).

### Example 2

A cyclic PSA process with eight units, each unit having four beds, has been mathematically modelled. The process cycle was in accordance with the schematic representation of **FIG. 3****.** The cycle program of each unit was according to the chart in **FIG. 5****.**

The adsorbent bed consisted in one single layer of activated carbon marketed by the Norit group under the trade name Activated Carbon R2030.

The other parameters of the PSA process unit are summarized in Table 3.

**Table 3**

| **Column characteristics** | | | |
|---|---|---|---|
| Bed length [m] | | Bed diameter [m] | |
| 12 | | 6 | |

| **Flow rates [m³/s] (at operating conditions)** | | | |
|---|---|---|---|
| Feed | Rinse | | Purge |
| 1.524 | 0.950 | | 1.524 |

| P_{high} [bar] | | P_{low} [bar] | |
|---|---|---|---|
| 33 | | 1 | |

| **Step times [s]** | | | |
|---|---|---|---|
| Adsorption, Rinse, Blowdown | Pressurization | | Purge |
| 460 | 345 | | 115 |

The feed gas had the following composition:
- 47.07% H₂
- 30.11% CO₂
- 0.03% CH₄
- 22.26% CO
- 0.53% N₂
The inlet temperature was 50°C.

### 2. a. Process with a single blowdown phase

The results are summarized in Table 4.

**Table 4**

| Results with a single blowdown phase | | | | |
|---|---|---|---|---|
| (H₂ + CO) product | | CO₂ product | | Productivity (H₂ + CO) [mol/kg/day] |
| Composition [%] | H₂/CO | Composition [%] | Recovery [%] | 146.8 |
| CO₂: 3.27 | 2.22 | CO₂: 95.16 | 91.6 | Productivity (CO₂) [mol/kg/day] |
| H₂: 66.26 | | H₂: 0.59 | | |
| CH₄: 0.02 | Inerts [%] | CH₄: 0.05 | | 60.0 |
| CO: 29.84 | | CO: 3.88 | | Power consumption [MW] |
| | | | | |
| N₂: 0.62 | | N₂: 0.32 | | |
| | 3.90 | | | 127.9 + 78.8 |

The power consumption includes the compression of the CO₂ to 110 bar for storage. The total power consumption was 206.7 MW, 127.9 MW due to the compression to 33 bar of the stream used in the rinse phase plus 78.8 MW necessary to compress to 110 bar the CO₂ product for transportation.

### 2. b. Process with a divided blowdown phase

The blowdown phase has been divided into eight equal partial blowdown phases, in accordance with the schematic representation of **FIG. 1****,** wherein n is 8. Eight discharge thanks were simulated, each collecting one of the sub blowdown phases. The tanks pressures were set to:
T₁: 25.00 bar
T₂: 18.60 bar
T₃: 13.60 bar
T₄: 9.54 bar
T₅: 6.42 bar
T₆: 4.06 bar
T₇: 2.35 bar
T₈: 1.00 bar

It has been noted that the compositions of the obtained products and the productivity of the PSA process were not affected by the division of the blowdown phase.

The power consumption obtained was 90.6 MW, including the compression of the CO₂ to 110 bar for storage.

The two processes 2.a and 2.b allow the recovery of an essentially pure CO₂ stream, containing more than 95% CO₂. The recovery yield is above 90%.

In the same time, the two processes 2.a and 2.b allow the recovery of a product effluent containing around 66% H₂ and 30% CO. The ratio H₂/CO is about 2.2. The content of inert compounds is lower than 5%. This product effluent may advantageously be introduced into a Fischer-Tropsch reactor.

The results obtained with the process 2.a and the process 2.b are compared. The performance of the process was not affected significantly and the recovered CO₂ stream and product effluent had comparable specifications. A significant reduction in the power consumption was achieved (over 56%).

## Claims

1. A cyclic PSA process, each cycle of said process comprising a blowdown phase consisting in lowering the pressure in an adsorbent bed from P_{high} to P_{low,} wherein said blowdown phase is divided into several partial blowdown phases, wherein the gas streams discharged during the partial blowdown phases are introduced into respective discharge tanks.

2. The process according to claim 1, wherein the low pressure P_{low} is lower than 5 bar, preferably lower than 3 bar, and more preferably said low pressure P_{low} is the atmospheric pressure.

3. The process according to any of claim 1 or 2, wherein the high pressure P_{high} is higher than 10 bar, preferably higher than 30 bar.

4. The process according to any of the preceding claims, wherein n, the number partial blowdown phases, is between 2 and 10.

5. The process according to any of the preceding claims, wherein the tanks are in fluid communication in series with increasing pressure and a compressor means is located between each connected tank.

6. The process according to claim 5, wherein the gas in each tank, except the tank having the highest pressure, is compressed and introduced into the other tank that has the lowest of the higher pressures.

7. The process according to any of the preceding claims, wherein each tank is equipped with a cooling means.

8. The process according to any of the preceding claims, wherein the blowdown pressure decrease condition is linear during each partial blowdown phase.

9. The process according to any of the preceding claims, wherein said process is to recover an essentially pure CO₂ stream from a feed gas containing H₂ and CO₂, each cycle of said process consisting of the following consecutive steps:
1. an adsorption phase, which comprises the introduction of said feed gas to the inlet of an adsorbent bed at high pressure P_{high} for flowing therethrough with selective adsorption of CO₂, forming a first adsorption front of CO₂ in said adsorbent bed, and the discharge of an effluent with unadsorbed products from the outlet of said adsorbent bed to a primary discharge tank, said primary discharge tank being under said high pressure P_{high}, said adsorption phase being continued for a controlled time period A;
2. a rinse phase, which comprises the introduction of an essentially pure CO₂ stream to the inlet of said adsorbent bed at said high pressure P_{high} for flowing therethrough, forming a second adsorption front of CO₂ in said adsorbent bed, and the discharge of a product effluent from the outlet of said adsorbent bed to said primary discharge tank, said rinse phase being continued for a controlled time period R which ends when said second adsorption front of CO₂ joins up the first one and arrives at the outlet of the adsorbent bed;
3. the blowdown phase, which comprises the lowering of the pressure in said adsorbent bed by countercurrently withdrawing a gas stream therefrom and the discharge of said gas stream through said inlet of said adsorbent bed to secondary discharge tanks, said blowdown phase being continued for a controlled time period B which ends when said adsorbent bed is at low pressure P_{low};
4. a countercurrent purge phase, which comprises the introduction of a gas stream coming from said primary discharge tank to the outlet of said adsorbent bed for flowing therethrough, and the discharge of an essentially pure CO₂ stream from the inlet of said adsorbent bed to said secondary discharge tank at P_{low}, said countercurrent purge phase being continued for a controlled time period PU;
5. a pressurization phase, which comprises the introduction of a gas stream coming from said primary discharge tank to the outlet of said adsorbent bed, said pressurization phase being continued for a controlled time period PR which ends when said adsorbent bed is at said high pressure P_{high}.

10. The process according to claim 9, wherein the essentially pure CO₂ stream which is introduced in the adsorbent bed during the rinse step is provided by the secondary discharge tanks.

11. The process according to any of claims 9 or 10, wherein all or part of the essentially pure CO₂ stream recovered is compressed to a pressure suitable for transportation to its storage site, preferably above the critical pressure.

12. The process according to any of claims 9 to 11, wherein each time period of the phases of the cycle A, R, B and the sum of PU and PR are equal.

13. The process according to claim 12, wherein said process is run in a four-bed unit, the time duration of a full cycle being divided in four equal parts and, during each of this part:
- one bed is in adsorption phase,
- one bed is in rinse phase,
- one bed is in blowdown phase, and
- one bed is in countercurrent purge phase or in pressurization phase.

14. The process according to claim 13, wherein said process is run in several four-bed units at the same time, the number of partial blowdown phases n being equal to the number of PSA units which are run at the same time.

15. A process according to claim 14 where the cycle program of each unit is shifted from one another for a time period equal to the time of one partial blowdown phase so that each secondary discharging tank is fed by one column at any time, except the tank at the lowest pressure which is fed at any time by three columns, two in purge phase and one in blowdown phase.

16. The process according to any of claims 1 to 15, wherein said process is a step of a syngas conditioning chain for a Fischer-Tropsch process.

17. The process according to any of claims 1 to 15, wherein said process is a step of a syngas conditioning chain for a coal to methanol synthesis process.
